# FASCICULE DE BREVET EUROPEEN

(11) **EP 0 963 172 B1**
(45) Date de publication et mention de la délivrance du brevet: **19.05.2004**
(21) Numéro de dépôt: 98908159.1
(22) Date de dépôt: 10.02.1998
(51) Int. Cl.: A47J 37/08

(54) **APPAREIL ELECTRIQUE DE GRILLAGE OU DE RECHAUFFAGE D'ALIMENT PLAN**
GRILLVORRICHTUNG ODER VORRICHTUNG ZUM AUFWÄRMEN VON FLÄCHEN NAHRUNGSMITTELN
ELECTRIC APPLIANCE FOR GRILLING OR HEATING A FLAT SLICE OF FOOD

(30) Priorité: 14.02.1997 FR 9701977
(43) Date de publication de la demande: 15.12.1999
(60) Demande divisionnaire: 04003121.3
(73) Titulaire: SEB S.A., 69130 Ecully (FR)
(72) Inventeur: BALANDIER, Jean-Marie, F-88400 Gerardmer (FR)
(74) Mandataire: Kiehl, Hubert
(86) Numéro de dépôt international: PCT/FR1998/000253
(87) Numéro de publication internationale: WO 1998/035597

(56) Documents cités:
- EP-A- 0 276 916
- WO-A-92/10127
- WO-A-95/07042
- DE-A- 1 565 043
- US-A- 4 748 308

## Description

### DOMAINE TECHNIQUE

La présente invention est relative à un appareil électrique de grillage ou de réchauffage pour aliment plan, notamment un grille-pain pour griller une tranche de pain simultanément sur ses deux faces.

### TECHNIQUE ANTERIEURE

Le grille-pain le plus courant comprend un boîtier avec une fente permettant d'accéder à une chambre interne paralléllépipédique usuellement verticale de grillage délimitée par deux grilles parallèles en vis-à-vis de maintien de la tranche. Deux sous-ensembles de chauffage par rayonnement sont agencés dans le boîtier respectivement à une certaine distance derrière chaque grille. Un sous ensemble peut être constitué d'un ou plusieurs éléments rayonnants associés à un réflecteur. Un élément rayonnant peut être une résistance électrique blindée en forme d'épingle, ou un filament à l'intérieur d'un tube quartz ou un filament enroulé sur un barreau isolant. L'uniformité de grillage selon un plan parallèle à la grille est autant que possible réalisée par la disposition des éléments rayonnants, la forme du réflecteur et l'espacement par rapport à la tranche. En alternative, et comme illustré par exemple dans le document US 2 285 156, le sous ensemble peut être constitué d'une plaque de verre ou de mica supportant un fil méplat résistif ou recevant une piste résistive imprimée. La température des éléments rayonnants portés au rouge est alors de l'ordre de 800°C à 1100°C.

Un chariot porte-tranche horizontal coulisse verticalement dans la fente le long de guides à l'encontre d'un ou plusieurs ressorts entre une position haute de réception de la tranche et une position basse de grillage en regard des sous-ensembles de chauffage. Ce chariot est usuellement abaissé manuellement grâce à un bouton externe traversant une fente du boîtier, et est accroché en position basse par un dispositif électromécanique d'alimentation en puissance électrique des sous-ensembles. Ce dispositif électromécanique est par ailleurs relié à des moyens de consigne ou à des dispositifs de capteurs de température ou de couleur pour libérer le chariot une fois l'importance du grillage désiré atteinte.

Simple et plutôt robuste, ce type de grille-pain a d'abord l'inconvénient d'être plutôt volumineux. Par ailleurs, les réflecteurs se retrouvant entre 10 et 15 millimètres des éléments rayonnants s'échauffent également et peuvent transmettre une partie de leur chaleur au boîtier. De plus, certains sous-ensembles à résistances électriques et réflecteurs produisent un chauffage quand même assez inégal dans le plan laissant sur les tranches de pain des zones plus grillées que d'autres. Le rendement thermique entre la quantité de chaleur théoriquement nécessaire pour le grillage et celle effectivement fournie s'avère alors assez faible. Enfin, certains consommateurs prétendent que l'humidité interne de la tranche a tendance à s'évaporer avant que les surfaces ne soient brunies et caramélisées.

On connaît également, par exemple des documents US 3 524 404, EP 187 492, des toasteurs par contact, par exemple pour cuire un croque-monsieur, comportant un boîtier muni d'une fente donnant dans une chambre interne avec deux sous-ensembles de grillage dont l'un au moins est monté déplaçable relativement en éloignement ou en rapprochement par rapport à l'autre pour venir s'appliquer directement de part et d'autre contre les faces de l'aliment plan et le griller par conduction. Ces sous-ensembles délimitent ainsi une fente de grillage de largeur variable apte à s'adapter à l'épaisseur de l'aliment à griller. De tels toasteurs comprennent donc, en outre, un dispositif associé à celui du déplacement du chariot pour avancer et appliquer le ou les sous-ensembles contre l'aliment plan avec une certaine pression, puis les reculer.

Un sous-ensemble de grillage est alors plutôt constitué d'une plaque chauffante portée à une température plus faible de l'ordre de 250°C. Par exemple, la plaque peut être en verre, ou en plastique technique tel qu'un polyimide, ou en métal tel que l'aluminium isolé à l'arrière par une couche de polyimide. La résistance chauffante en serpentin peut être tracée ou sérigraphiée sur la face externe avec une poudre de métal liée ou un mélange de polyimide et de flocons d'argent. La couche interne de contact est alors de préférence recouverte d'une couche de qualité alimentaire et non-adhérente, tel qu'un composé téflonné. En variante, le document US 2 285 156 décrit un support de tranche constitué de deux plaques de métal ajourées et articulés en leur bord longitudinal inférieur susceptibles d'être installées entre les grilles délimitant la chambre de grillage par rayonnement afin de permettre un chauffage principal par conduction venant des plaques elles même surchauffées par le rayonnement, et partiellement par rayonnement direct traversant les ouvertures de plaques.

Ces toasteurs se présentent généralement de manière plus compacte et travaillent à température plus basse, donc moins dangereuse. Toutefois, l'uniformité, la qualité et la vitesse de grillage obtenues sont généralement insuffisantes. De plus, certains consommateurs estiment que la tranche de pain est alors chauffée dans la masse au point de perdre toute souplesse et devenir rigide comme une biscotte.

Que ce soit pour les grille-pain ou les toasteurs, un autre inconvénient vient du fait que l'appareil doit rester connecté au réseau électrique pendant son utilisation faisant qu'il est rarement présent sur la table à manger où son gros cordon de raccord électrique s'avère encombrant. L'appareil est alors usuellement installé sur une table à part. Mais alors, soit le consommateur prépare à l'avance une série de pains grillés qui redeviennent froids au moment de la consommation ultérieure, soit le consommateur rechigne à effecteur des allers/retours le matin pendant son petit déjeuner. L'appareil est alors trop souvent oublié dans un placard.

### EXPOSE DE L'INVENTION

Le but de la présente invention est un appareil électrique de grillage par rayonnement plus efficace en ce qu'il grille de manière homogène jusqu'à brunissement désiré de la surface de l'aliment, et ceci rapidement pour éviter un dessèchement de l'intérieur. De préférence, l'appareil doit pouvoir être réalisé de manière compacte, et pouvoir fonctionner à une température plus basse pour présenter moins de risques de brûlures et un meilleur rendement thermique.

Un autre but de la présente invention est un appareil de grillage qui puisse être installé plus facilement au milieu de la table afin de pouvoir griller les aliments, notamment des tranches de pain, confortablement au moment de leur consommation.

Selon un premier aspect de l'invention, l'appareil de grillage d'une tranche plane d'aliment comprenant un boîtier avec une fente permettant d'accéder à une chambre paralléllépipédique de grillage dans les faces principales opposées dans laquelle sont respectivement agencés en vis-à-vis deux sous ensembles de chauffage, l'un au moins des sous-ensembles comprenant une plaque de rayonnement sensiblement homogène chauffée par des moyens de chauffage, est remarquable du fait que la face de rayonnement de cette plaque est complétée de moyens de maintien d'un écartement prédéterminé inférieur au centimètre avec la tranche, cette face et/ou tranche étant en contact avec ces moyens de maintien de l'écartement selon des surfaces de largeur submillimétrique.

Par exemple, l'appareil peut comprendre une chambre paralléllépipédique horizontale dont la face inférieure comprend un sous-ensemble à plaque de rayonnement munie de moyens de maintien de l'écartement sur lesquels repose la tranche, la face supérieure comprenant un sous-ensemble classique, par exemple à élément rayonnant associé à un réflecteur, ou également une plaque de rayonnement à distance.

Sachant que l'intensité du rayonnement décroît au carré de la distance, la percée selon l'invention consiste à aménager des moyens ponctuels ou longilignes permettant d'assurer un écartement faible mais très précis pour oser rapprocher l'aliment très près d'une plaque homogène à haute température dont le rayonnement est intrinsèquement uniforme, et ceci afin d'obtenir un grillage superficiel fort, régulier et rapide essentiellement par rayonnement, le chauffage par conduction résiduel au travers des moyens de maintien de l'écartement étant minimisé.

De préférence, les deux sous-ensembles comprennent chacun une plaque de rayonnement dont la face de rayonnement est complétée de moyens de maintien d'un écartement avec la tranche, et l'un au moins des sous-ensembles est monté déplaçable relativement en éloignement et en rapprochement par rapport à l'autre pour appliquer de part et d'autre la tranche contre les moyens de maintien avec une pression prédéterminée.

Un grillage identique sur les deux faces de la tranche est ainsi facilement obtenu, sans devoir ajuster deux sous-ensembles différents. De plus, l'appareil peut alors être utilisé indifféremment à la verticale ou à l'horizontale, la pression d'application de la tranche contre les moyens d'écartement étant parfaitement contrôlée à une valeur prédéterminée, par exemple comprise entre 50 à 400 N/m2.

De préférence, l'écartement entre la tranche et la face de rayonnement est compris entre 0,1 millimètres et 6 millimètres, plus particulièrement entre 1 et 3 millimètres. Cet écartement est sensiblement inférieur à celui usuellement présent entre la tranche et un sous-ensemble de chauffage par rayonnement selon l'art antérieur. Notamment, l'écartement est établi à 3 millimètres pour une plaque portée à une température de l'ordre de 500°C ou de l'ordre de 400°C permettant un grillage satisfaisant d'une tranche de pain respectivement en 15 et 40 secondes, voire établi à 2 millimètres pour une plaque portée à une température de l'ordre de 400°C.

On peut ainsi effectuer rapidement des grillages d'intensité satisfaisante avec des températures de moitié, voire du tiers des températures antérieures, ce qui permet une économie substantielle d'énergie tout en réduisant les risques d'inflammations. Par ailleurs, ces températures moindres réduisent aussi l'échauffement à l'arrière des sous-ensembles, ce qui permet de diminuer l'espace entre ces sous-ensembles et le boîtier plastique ou métallique. Un tel appareil plus compact peut être installé plus confortablement au milieu d'une table.

Utilement, la surface totale de contact des moyens de maintien de l'écartement avec la face et/ou tranche est inférieure à 15 pour-cent de la surface totale de la face de rayonnement, de préférence inférieure à 8 pour-cent. Utilement aussi, ces moyens d'écartement de surfaces de largeur submillimétrique sont espacés régulièrement d'une valeur comprise entre 5 et 20 millimètres. Ceci permet de minimiser de manière satisfaisante la part de chauffage par conduction résiduelle indésirée passant par ces surfaces de contact et susceptibles de laisser des traces de surgrillages, ainsi que l'ombre portée par ces moyens au chauffage par rayonnement, et ceci sans pour autant risquer que ces moyens ne pénètrent dans l'aliment en ne maintenant plus l'écartement prévu.

Selon un premier mode de réalisation, les moyens de maintien sont réalisés sous la forme de bossages matricés dans la plaque ou imprimés en couches épaisses sur la face selon un agencement en quadrillage, en ligne ou en réseau de points, ces bossages étant régulièrement espacés.

Selon un autre mode de réalisation, la plaque est réalisée par un assemblage de sous-plaques longitudinales ou transversales, l'un des bords de jointure formant une saillie longiligne d'écartement.

Selon un autre mode de réalisation, les moyens de maintien sont réalisés sous la forme d'une grille rapportée réalisée en fils métalliques, céramiques ou de verre, si désiré les fils étant ondulés, ou réalisée par une série de ressorts à spires ou de barrettes crantées parallèles côte-à-côte.

Ainsi réalisés, ces moyens de maintien ne présentent qu'une faible adhérence au produit alimentaire plan, sont résistants mécaniquement, thermiquement, et peuvent facilement être rendus inertes aux aliments.

Utilement alors, la grille peut être amovible pour retrouver volontairement, le cas échéant, un mode de chauffage par conduction, par exemple pour cuire un croque-monsieur.

De préférence, l'un ou les deux sous-ensembles de chauffage sont respectivement constitué d'une plaque de rayonnement en substrat diélectrique sur laquelle est sérigraphiée une piste résistive de chauffage. Ainsi, le temps de grillage du premier cycle peut être sensiblement minimisé. Par un tracé adéquat de la piste, on peut également optimiser la répartition de la température donc de grillage.

Selon un autre aspect de l'invention, l'appareil de grillage d'une tranche plane d'aliment comprenant un boîtier avec une fente permettant d'accéder à une chambre paralléllépipédique de grillage dans les faces principales opposées de laquelle sont respectivement agencés en vis-à-vis deux sous ensembles de chauffage comprenant une plaque de chauffage sensiblement homogène chauffée par des moyens de chauffage, l'un au moins des sous-ensembles étant monté déplaçable relativement en éloignement et en rapprochement par rapport à l'autre pour appliquer de part et d'autre la tranche avec une pression prédéterminée, est remarquable du fait que les plaques sont en un matériau et présentent des dimensions telles qu'elles constituent des plaques d'accumulation thermique de chauffage par convection ou par rayonnement à courte distance.

Un tel appareil peut alors être installé dans un premier temps sur une table à part où il peut être branché au réseau afin que les moyens de chauffage portent les plaques de chauffage à une haute température, par exemple de l'ordre de 500°C ; puis cet appareil peut être débranché pour être alors installé sans son cordon au milieu de la table, le grillage étant alors assuré par la chaleur emmagasinée par les plaques d'accumulation appliquées contre l'aliment. Un tel appareil une fois autonome peut ainsi être installé de manière conviviale sur la table et permet de déguster immédiatement sur place des aliments chauds.

Dans la pratique, ces plaques d'accumulation s'avèrent nettement plus sûres que d'autres solutions susceptibles d'être envisagées pour un appareil de chauffage autonome, tel qu'un appareil à brûleur et petite cartouche de gaz liquéfié dont la présence d'une flamme constitue toujours un danger notamment en présence d'enfants, ou un appareil électrique à batteries qui serait alors beaucoup trop coûteux, lourd et encombrant. On pourrait également envisager un chauffage par brûleur catalytique à une température réduite de l'ordre de 500°C à 800°C, ce qui supprime tout risque lié à une présence de flamme. Le système d'allumage est toutefois plus sophistiqué et le tamis ou matelas catalyseur est assez coûteux.

Le matériau d'accumulation thermique peut être un métal, de préférence un acier revêtu de nickel, un acier inoxydable ou une fonte recouverte si désiré d'un revêtement alimentaire, ou, pour une température modérée de l'ordre de 300°C peut être une pierre minérale dense réfractaire telle que celle utilisée pour la "pierrade", voire une vitrocéramique.

En d'autres termes, on choisit un matériau ayant de bonnes propriétés d'accumulation thermique par unité de volume, un matériau apte à supporter la température requise de l'ordre de 500°C, ce matériau ayant également une conductivité thermique élevée afin de pouvoir également accumuler et restituer rapidement les calories. La pierre minérale devient un peu fragile à température élevée et accumule et restitue les calories plus lentement que le métal. La vitrocéramique supporte de hautes températures, mais présente une capacité et une conductibilité thermique moindre que ceux de l'acier, et est onéreuse.

Après de nombreux essais en atelier, il s'est avéré qu'une solution avantageuse consiste en une plaque métallique pour chaque sous-ensemble de chauffage, cette plaque présentant une surface de l'ordre de 230 millimètres par 130 millimètres ainsi qu'une épaisseur comprise entre 4 et 10 millimètres, de préférence 6 millimètres. De préférence, la face de chauffage par rayonnement est alors munie de moyens de maintien d'un écartement compris entre 0,2 et 3 millimètres avec la tranche d'aliment.

En effet, une fois portée à 500°C, une telle paire de plaques permet de griller pas moins de quatre fournées de pain-toast respectivement en 15, 30, 40 et 50 secondes, ce qui est largement suffisant pour le petit-déjeuner d'un couple de personnes. Les plaques d'acier présentent notamment le meilleur rapport entre une grande capacité thermique et un coût de réalisation faible. Les moyens de maintien d'écartement permettent d'effectuer un grillage de préférence par rayonnement sans risque d'inflammation du pain tout en minimisant les pertes par convection.

Utilement, l'appareil peut comprendre un boîtier amovible contenant la chambre de grillage avec les sous-ensembles de chauffage, ce boîtier étant susceptible d'être posé sur un socle branché au réseau et comportant des connecteurs en correspondance avec des connecteurs du boîtier pour branchement automatique des moyens de chauffage des plaques une fois le boîtier posé sur son socle. L'utilisation de l'appareil autonome est ainsi grandement facilitée dans la mesure où il suffit de simplement reposer le boîtier amovible sur son socle installé à demeure sur une table à part pour reconnecter les plaques afin de les porter à nouveau à haute température en vue de fournées supplémentaires.

Utilement, l'appareil comprend des moyens électromécaniques ou électroniques de régulation de la chauffe préliminaire des plaques puis de contrôle du grillage de l'aliment en fonction d'une consigne d'intensité de grillage désirée et d'un capteur de température effective des plaques de chauffage ou d'un capteur chromatique de brunissage effectif de la tranche. L'utilisateur est ainsi agréablement déchargé de la surveillance de l'évolution de l'opération de grillage, notamment pour les premières fournées rapides. De plus, l'appareil peut également être utilisé de manière conventionnelle lorsque installé sur son socle.

### DESCRIPTION SOMMAIRE DES DESSINS

L'invention sera mieux comprise à l'étude d'un mode de réalisation pris à titre nullement limitatif et illustré dans les figures annexées dans lesquelles :
- la figure 1 est une vue schématique en coupe verticale transversale d'un grille-pain selon l'invention, et
- les figures 2a à 2f illustrent en perspectives schématiques différents modes de réalisation de plaques de chauffage par rayonnement de proximité susceptibles d'être incorporées dans le grille-pain de la figure 1.

### MEILLEURE MANIERE DE REALISER L'INVENTION

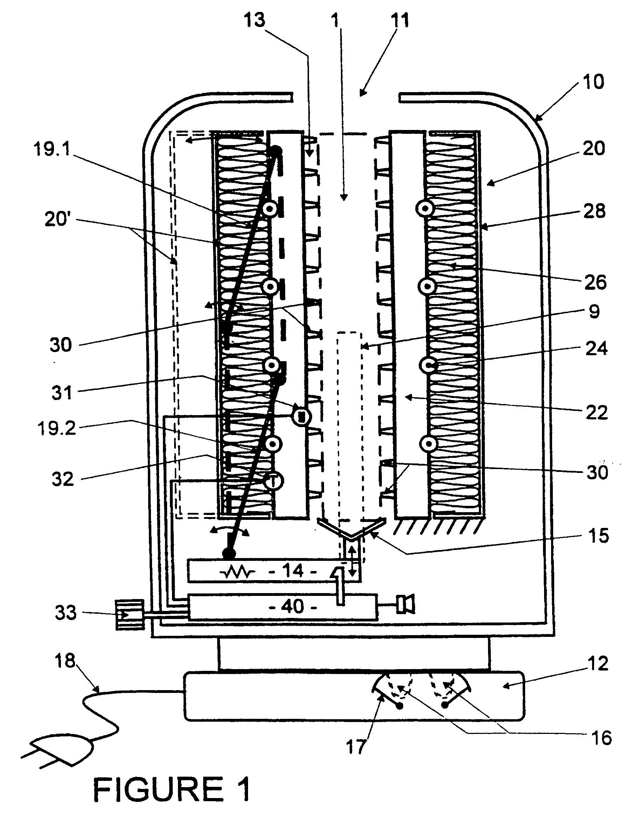

La meilleure manière de réaliser l'invention est illustrée figure 1, où le grille-pain se présente de l'extérieur sous la forme d'un boîtier 10 sensiblement paralléllépipédique vertical aux bords arrondis solidaire d'un socle de base 12, la face supérieure de ce boîtier présentant une fente médiane longitudinale 11 d'accès à une chambre interne de grillage central 13 recevant une tranche de pain 1. On peut également envisager un boîtier 10 plus large présentant deux ou plusieurs fentes 11 parallèles côte-à-côte donnant accès à des chambres individuelles de grillage 13 identiques. Ce boîtier peut être réalisé en métal ou en matière plastique rigide thermiquement stable et garni de décorations ou d'inscriptions externes.

La chambre interne de grillage 13 est délimitée, en ses deux faces verticales principales, en l'occurrence latérales, par deux sous-ensembles de chauffage homogènes dans un plan et orientés en direction de la chambre : un sous-ensemble droit 20 fixe dans le boîtier et un sous-ensemble gauche 20' mobile en translation perpendiculaire à son plan, c'est-à-dire en rapprochement et en éloignement par rapport au sous-ensemble fixe 20 tout en restant parallèle à celui-ci. Par exemple, et comme illustré, le sous ensemble mobile 20' est porté en chacune de ses deux tranches d'extrémités par des bielles 19.1 et 19.2 formant de part et d'autre un parallélogramme déformable oscillant autour de son point d'équilibre n'induisant qu'un faible débattement vertical. Ces bielles sont synchronisées angulairement par un mécanisme comportant par exemple des secteurs dentés et des bielles secondaires, et les parallélogrammes sont également synchronisés angulairement par au moins un axe de rotation longitudinal.

Au sein de la chambre interne 13 est agencé un chariot porte-tranche 15 susceptible d'être déplacé par des moyens mécaniques 14 comprenant un bouton de préhension externe traversant une fente latérale 9 du boîtier 10, et ceci d'une position haute sensiblement au milieu de la chambre pour réception de la tranche 1 en une position basse telle qu'illustrée sur la figure 1 dans laquelle cette tranche 1 se situe en regard des sous-ensembles de chauffage 20, 20'. De préférence, ces moyens mécaniques 14 de déplacement du chariot porte-tranche 15 effectuent également la rotation des bielles 19.1, 19.2 pour déplacement combiné du sous-ensemble mobile 20'. Notamment, ces moyens mécaniques 14 comprennent un ou plusieurs ressorts qui sont comprimés lors de l'abaissement du chariot de telle sorte que l'énergie accumulée permet ultérieurement de remonter ce chariot 15 en position haute et simultanément d'éloigner le sous-ensemble mobile 20' une fois l'opération de grillage effectuée.

A ce titre, ces moyens mécaniques 14 peuvent être accrochés par des moyens électromécaniques et/ou électroniques 40 de contrôle de l'opération de grillage. Ces moyens 40 reçoivent d'une part une consigne d'intensité de grillage désirée, par exemple au travers d'un bouton externe 33 agissant sur un potentiomètre ou déplaçant un élément de bilames, et d'autre part des informations sur le déroulement du grillage telle qu'une information de brunissage effectif de face de tranche 1 telle que lue par un capteur chromatique 31, ou une information de température effective de l'un des sous-ensembles de chauffage grâce à un capteur de température 32 alors combinée avec une information de délai donnée par une horloge interne. Une fois l'intensité de grillage atteinte, ces moyens électromécaniques 40 décrochent les moyens mécaniques 14 autorisant ainsi la remontée du chariot 15 et l'écartement du sous-ensemble mobile 20', si désiré accompagné d'un bip sonore d'information de l'utilisateur. Dans une version simplifiée, les moyens électroniques 40 ne donnent qu'une information visuelle ou sonore du bon achèvement du grillage en laissant le soin à l'utilisateur de déclencher l'éjection de la tranche.

Il convient de noter que les moyens élastiques contenus dans les moyens mécaniques 14 permettent incidemment de rapprocher le sous-ensemble mobile 20' plus ou moins par rapport au sous-ensemble fixe 20 de manière à adapter la chambre interne de grillage 13 à l'épaisseur de la tranche de pain 1, et de manière à serrer cette tranche avec une pression prédéterminée pour un maintien correct dans son plan.

Plus particulièrement selon un premier aspect de l'invention, chaque sous-ensemble de chauffage comprend une plaque 22 portée à haute température pour chauffer par rayonnement grâce à la présence de moyens de maintien d'écartement 30 sur sa face de rayonnement. Ces moyens 30 établissent l'écartement entre la tranche 1 et la face rayonnante en vis-à-vis à une valeur bien prédéterminée comprise entre 0,1 millimètre et 6 millimètres une fois les sous-ensembles appliqués de part et d'autre de la tranche par les moyens mécaniques 14. Les plaques 22, constituant des plaques de répartition homogène dans un plan du rayonnement, peuvent être des plaques métalliques en acier ou aluminium, en céramique, en verre, pyrex ou vitrocéramique opaque ou transparent. Ces plaques peuvent éventuellement être revêtues de matériaux décoratifs ou de matériaux anti-adhésifs tels qu'un émail ou subir un traitement de surface d'anti-oxydation tel qu'un recouvrement de nickel, chrome ou d'aluminium.

Chacune des plaques est chauffée à l'arrière par des éléments chauffants 24 qui, sur la figure 1, sont illustrés sous la forme de résistances blindées incrustées mécaniquement dans la face arrière. En alternative, l'élément chauffant conductif peut être un sandwich du type polyimide ou micanite contenant un serpentin résistif chauffant en métal découpé ou sérigraphié sur isolant.

De préférence, le sous-ensemble est constitué d'une plaque de substrat diélectrique, tel qu'une plaque de verre, sur laquelle est soit déposée une couche d'oxyde d'étain dopé, soit sérigraphiée une piste résistive à base de poudres métalliques ; ou une plaque présentant sur l'une de ses faces une couche diélectrique sur laquelle est sérigraphiée une piste résistive chauffante. Le tracé de cette piste est optimisé pour assurer une bonne répartition de la température, donc une homogénéité du grillage. Cette face arrière chauffante de plaque 24 peut, si désiré, être séparée thermiquement du boîtier 10 par une couche de matière isolante 26 soutenue par un support arrière 28.

A la place de ces éléments chauffants conductifs, on peut également envisager des éléments chauffants par rayonnement à distance tels qu'un fil supporté par des barres isolantes thermiques telles que du verre, ou des résistances blindées portées au rouge et associées à un réflecteur arrière métallique 28.

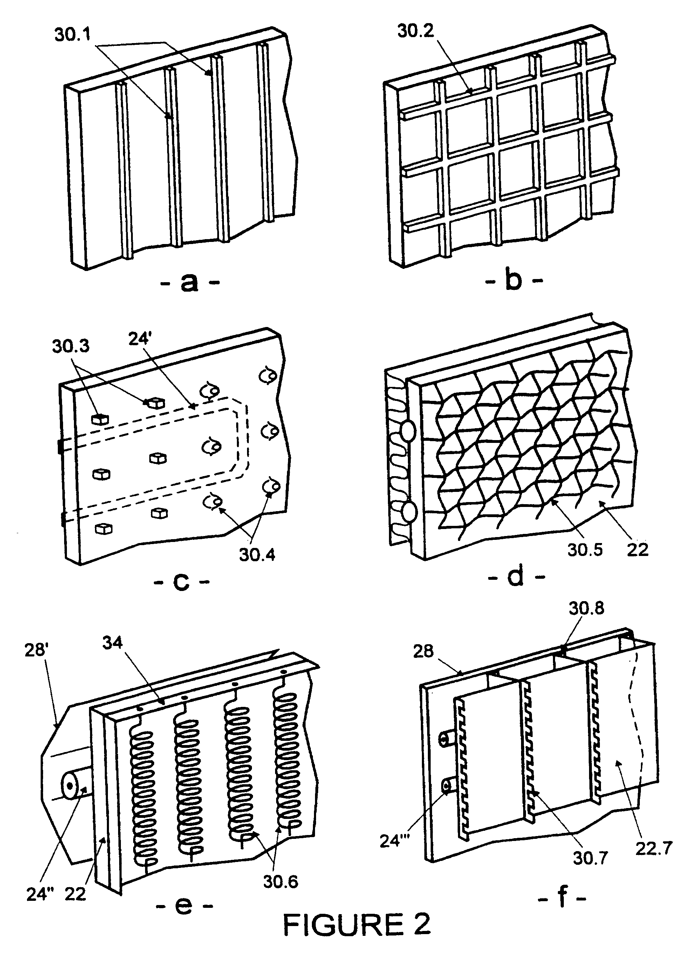

D'autres variantes de réalisation de moyens d'écartement 30, sont illustrées figures 2a à 2f, permettant, lorsque les sous-ensembles 20, 20' sont plaqués contre la planche de pain 1, que les faces de celle-ci soient maintenues à une distance prédéterminée voulue des faces rayonnantes des plaques 22.

La figure 2a illustre une série de lignes 30.1 rectilignes, parallèles côte-à-côte d'épaisseurs comprises entre 0,1 millimètre et 0,5 millimètre réalisées par une ou plusieurs couches superposées d'émail imprimé ou sérigraphié. La largeur de ces lignes est de l'ordre du millimètre alors que leur écartement est compris entre 2 et 5 millimètres.

La figure 2b illustre un quadrillage 30.2 réalisé de manière analogue aux lignes 30.1 dont les côtés des mailles sont également de l'ordre de 2 millimètres à 10 millimètres.

La figure 2c illustre des bossages trapézoïdaux 30.3 ou en forme de troncs de cônes 30.4 matricés dans la face de la plaque de chauffage 22 lors de sa réalisation. La surface au sommet de ces passages est comprise entre 0,5 millimètre² et 2 millimètres² pour une hauteur comprise entre 0,5 millimètre et 2 millimètres.

Cette figure 2c illustre également un exemple de pistes de chauffage sérigraphiées ou pistes métalliques découpées 24' et collées sur la face arrière et passant par exemple à mi-chemin entre les bossages. La piste peut intégrer un capteur de température constitué d'une seconde piste dont la variation de la valeur ohmique en fonction de la température est exploitée par un régulateur. La piste chauffante peut également avoir un coefficient de température tel que la plaque s'autorégule d'elle même. La plaque de la figure 2c peut ainsi fonctionner en rayonnement de proximité à des températures comprises entre 300°C et 500°C.

La figure 2d illustre des moyens de maintien d'écartement sous la forme d'un grillage 30.5 de faible inertie thermique en mailles compris entre 5 millimètres et 10 millimètres de côté réalisés à partir d'un fil inox, d'un fil céramique ou d'un fil de verre de faible diamètre, par exemple de 0,6 millimètre. De préférence, le fil fin est ondulé pour former des vagues de telle sorte à donner à la grille une épaisseur de l'ordre de 3 millimètres. Si désiré, ce grillage peut être accroché de manière démontable sur la plaque 22 permettant de revenir éventuellement à un chauffage par conduction.

La figure 2e illustre des moyens d'écartement réalisés sous la forme d'une pluralité de ressorts 30.6 à spires hélicoïdales, ces ressorts étant montés parallèles côte-à-côte tendus entre deux montants supérieur et inférieur (ou latéraux) d'un cadre 34 rapporté contre la plaque de chauffage 22. Dans cet exemple est également illustré un mode de chauffage de plaques au moyen d'un tube à infrarouges 24' situé à distance à l'arrière de la plaque et complété par un réflecteur arrière 28' d'isolation du sous-ensemble en regard du boîtier 10.

La figure 2f illustre une plaque de chauffage constituée de l'assemblage d'une pluralité de sous-plaques 22.7 en tôle découpées et pliées de telle sorte à former respectivement une bordure de jonction 30.7 en dents de scie proéminente vers l'intérieur de la chambre de grillage, ainsi qu'une patte arrière 30.8 d'assemblage avec un réflecteur arrière 28", ces sous-plaques supportant de manière isolée des éléments résistifs blindés 24'''.

Dans un mode de réalisation comme dans un autre, tous ces moyens d'écartement 30 se caractérisent par leur étroitesse, c'est-à-dire que leur largeur de contact est inférieure au millimètre, afin de minimiser autant que possible une partie de chauffage par conduction directe non désirée et afin de laisser une surface maximum pour le chauffage par rayonnement. Toutefois, ces zones de contacts doivent être suffisamment nombreuses pour que l'incrustation des zones d'appui soit réduite au minimum car on diminue ainsi l'effort de décollement du pain et les traces noires au goût âcre. Dans les modes de réalisation préférés des figures 2c à 2f, la densité de surface de contact tranche/plaques est comprise entre 0,5 à 5 points par centimètre², par exemple à 1,6 points par centimètre².

D'excellents résultats sont notamment obtenus avec un grillage ondulé selon la figure 2 d réalisé avec un fil inox de diamètre de 0,5 millimètre, avec une maille carrée de 7 millimètres de côté donnant 2 points de contacts par centimètre² , les ondulations imposant un écartement de 3 millimètres entre la tranche de pain et les sous ensembles de chauffage. La surface de contact du fil ondulé sur le pain est réduite et très arrondie. De plus, le fil ondulé autorise une extraction du pain sans effort et sans arrachement de la mie.

L'appareil décrit précédemment est utilisé de manière conventionnelle, c'est-à-dire que, après avoir indiqué l'intensité de grillage désirée en agissant sur le bouton 33, l'utilisateur dépose une tranche de pain 1 sur le chariot porte-tranche 15 puis agit sur le bouton externe des moyens mécaniques 14 pour abaisser la tranche dans la chambre de grillage. Cette action provoque simultanément l'avance du sous-ensemble mobile 20' serrant cette tranche avec une pression prédéterminée contre le sous-ensemble fixe 20.

Toutefois, la présence des moyens d'écartement 30 sur la face de chauffage des plaques 22 modifie fondamentalement le mode de grillage. En effet, les moyens de contrôle 40 fixent la température des plaques 22 à une valeur comprise entre seulement 400°C et 500°C permettant de griller de manière uniforme les faces en correspondance de la tranche de pain, et ceci en un délai très court de l'ordre de 15 à 40 secondes. Ce délai est nettement insuffisant pour provoquer l'évaporation de l'humidité interne de la tranche. Ce mode de chauffage se distingue donc du chauffage direct par conduction à des températures plus basses de l'ordre de 250°C conduisant, après une longue période d'attente, à une tranche grillée uniformément dans la masse. Ce mode de chauffage se distingue aussi radicalement du chauffage par rayonnement à distance impliquant des températures de l'ordre de 800°C à 1000°C qui est nettement plus lent à s'équilibrer donc plus difficile à maîtriser.

Selon un autre aspect de l'invention, les plaques de chauffage 22 présentent une épaisseur importante, supérieure à 6 millimètres, voire 10 millimètres, de telle sorte à constituer des plaques d'accumulation thermique permettant de griller l'aliment de manière autonome, c'est-à-dire sans être reliées au réseau électrique. Par exemple, les plaques 22 sont en acier ou en fonte d'épaisseur de 6 millimètres constituant des masses d'environ 1,5kg chacune. En alternative, ces plaques peuvent être en pierre, telles que celles utilisées pour les "pierrades", et présentent alors une épaisseur supérieure afin d'être suffisamment lourdes pour constituer un réservoir thermique adéquat.

Le boîtier 10 contenant les sous-ensembles de chauffage 20, le chariot 15 avec le mécanisme de déplacement 14 et les moyens de contrôle 40 est monté de manière amovible sur son socle 12. Par exemple, ce socle présente une empreinte concave dans laquelle vient s'installer de manière stable la base du boîtier 10. Au fond de cette empreinte sont également aménagés des connecteurs 16, par exemple femelles, recevant des connecteurs mâles correspondants du boîtier 10 pour raccordement électrique. De préférence, ces connecteurs sont isolés lorsque non branchés par des volets de fermeture 17 de sécurité, la forme de ces volets faisant qu'ils sont automatiquement déplacés par les connecteurs mâles introduits.

Comme illustré sur la figure 1, les plaques d'accumulation 22 sont de préférence complétées avec les moyens d'écartement décrits précédemment pour forcer un chauffage de la tranche de pain 1 essentiellement par rayonnement.

Ainsi, lorsque le boîtier 10 est installé dans son socle 12 et qu'un interrupteur non illustré du socle est enclenché pour mettre en marche l'appareil, les moyens électromécaniques et/ou électroniques 40 de régulation alimentent les éléments de chauffage 24 jusqu'à ce que les plaques d'accumulation 22 atteignent une température de l'ordre de 500°C. Si nécessaire, ces moyens 40 réenclenchent l'alimentation électrique pour maintenir ces plaques d'accumulation chaudes si l'appareil est encore en attente. En moyenne, on constate que la durée de préchauffage des plaques à 500°C nécessite environ 7 minutes avec des éléments chauffants de puissance globale égale à 2kW, et peut même être réduite à 5 minutes avec des résistances chauffantes de 3KW.

Une fois la famille ou les convives attablés, l'utilisateur peut alors transporter le boîtier 10 en le saisissant par des poignées isolantes externes pour l'amener et le poser au milieu de la table pour grillage de pain ou autres aliments de manière conviviale. Grâce aux plaques d'accumulation et de chauffage 22, et en combinaison avec les moyens de maintien 30 de faible écartement avec les tranches de pain, on constate que l'on grille très rapidement une première fournée en 15 secondes à 500°C. Cette durée de grillage augmente au fur et à mesure que les plaques descendent en température, le grillage de la cinquième fournée prenant environ 90 secondes à environ 330°C, un délai d'environ 15 secondes espaçant chacune des fournées. Si d'autres grillages de tranches de pain sont envisagés, il suffit alors que l'utilisateur repositionne le boîtier 10 sur son socle 12 pour enclencher un réchauffage des plaques d'accumulation, ce réchauffage s'effectuant en à peu près 2 minutes pour des résistances de chauffage de puissance globale de l'ordre de 3KW.

L'un des avantages de ce chauffage par accumulation est que les plaques se nettoient automatiquement à chaque montée en haute température par effet pyrolytique. Cet appareil présente également une sécurité accrue dans la mesure où les éléments chauffants ne sont plus portés au rouge. De plus, il est relativement économique dans la mesure où les éléments de chauffage ne sont enclenchés que lorsque nécessaire, la chaleur fournie étant essentiellement utilisée lors du grillage et peu perdue par convection.

L'invention n'est nullement limitée strictement aux exemples de réalisation décrits précédemment, mais englobe de nombreuses modifications ou améliorations telles que décrites dans les revendications.

Par exemple, les moyens d'écartement peuvent être montés sur la face chauffante des plaques 22 de manière amovible de telle sorte à laisser à l'utilisateur le choix du mode de chauffage par rayonnement ou par conduction selon le type d'aliment concerné. Alors, et notamment dans le cas d'un sous-ensemble constitué d'une plaque de substrat diélectrique sur laquelle est sérigraphiée une piste résistive, on prévoit alors sur la nouvelle face de contact avec la tranche un revêtement d'un matériau ayant des propriétés anti-adhésive tel qu'une laque polyimide, PTFE, ou émail. Le sous-ensemble fonctionnant alors en conduction n'est porté qu'à une température réduite de 200-250°C.

On peut également envisager que les moyens d'écartement soient agencés sous la forme d'un support de tranche amovible aux moyens de poignées externes isolantes et constitué de deux grilles à fils ondulés ou à ressorts, ces grilles étant articulées en leur bord longitudinal. De préférence alors, le grille-pain est légèrement incliné de 5 à 10° du côté du sous ensemble fixe. Cet agencement permet de prévoir que le sous ensemble mobile revienne en contact contre le sous ensemble fixe après extraction du support de tranche de telle sorte à éviter des fuites de calories par convection entre deux fournées.

On peut également envisager des appareils agencés à l'horizontale, l'aliment reposant alors déjà de par son poids sur les moyens d'écartement du sous-ensemble de chauffage inférieur, le sous-ensemble de chauffage supérieur pouvant alors être de type conventionnel par rayonnement à distance ou également par rayonnement de proximité selon l'invention.

Dans la variante verticale, on peut envisager que le fond de la chambre de grillage 13 soit formé d'un tiroir permettant d'extraire les miettes, voire les jus de viande. Dans la variante horizontale, les moyens de maintien d'écartement inférieurs sont alors un peu plus hauts de telle sorte à former également des sortes de canalisations d'évacuation de jus.

### POSSIBILITES D'APPLICATION INDUSTRIELLE

L'invention trouve son application dans le domaine technique des appareils de grillage ou de réchauffage du type grille-pain.

## Revendications

1. Appareil de grillage d'une tranche plane d'aliment (1) comprenant un boîtier (10) avec une fente (11) permettant d'accéder à une chambre paralléllépipédique de grillage (13) dans les faces principales opposées de laquelle sont respectivement agencés en vis-à-vis deux sous-ensembles de chauffage (20, 20'), l'un au moins des sous-ensembles comprenant une plaque (22) de rayonnement sensiblement homogène chauffée par des moyens de chauffage (24), **caractérisé en ce que** la face de rayonnement de cette plaque (22) est complétée de moyens de maintien (30) d'un écartement prédéterminé inférieur au centimètre avec la tranche, cette face ou cette tranche étant en contact avec ces moyens de maintien de l'écartement selon des surfaces de largeur submillimétrique.

2. Appareil selon la revendication 1, **caractérisé en ce que** les deux sous-ensembles (20, 20') comprennent chacun une plaque de rayonnement (22) dont la face de rayonnement est complétée de moyens de maintien d'un écartement (30) avec la tranche (1), et **en ce que** l'un au moins des sous-ensembles (20') est monté déplaçable (14, 19.1, 19.2) relativement en éloignement et en rapprochement par rapport à l'autre pour appliquer de part et d'autre la tranche contre les moyens de maintien.

3. Appareil selon la revendication 1 ou 2, **caractérisé en ce que** l'écartement maintenu par les moyens de maintien (30) entre la tranche (1) et la face de rayonnement de la plaque (22) est compris entre 0,1 millimètres et 6 millimètres, de préférence entre 1 millimètre et 3 millimètres.

4. Appareil selon l'une des revendications 1 ou 2, **caractérisé en ce que** l'écartement maintenu par les moyens de maintien (30) entre la tranche et la face de rayonnement de la plaque (22) est de l'ordre de 3 millimètres pour une plaque (22) portée à une température de l'ordre de 500°C, ou de l'ordre 2 millimètres pour une plaque (22) portée à une température de l'ordre de 400°C.

5. Appareil selon l'une des revendications précédentes, **caractérisé en ce que** la surface totale de contact des moyens de maintien de l'écartement (30) avec la face et/ou la tranche est inférieure à 15 pour-cent de la surface totale de la face de rayonnement de la plaque (22), de préférence inférieure à 8 pour-cent, et **en ce que** les moyens d'écartement sont espacés régulièrement d'une valeur comprise entre 5 millimètres et 20 millimètres.

6. Appareil selon l'une des revendications précédentes, **caractérisé en ce que** les moyens de maintien de l'écartement (30) sont réalisés sous la forme de bossages matricés (30.3, 30.4) dans la plaque (22) ou de bossages imprimés (30.1, 30.2) en couches épaisses sur la face selon un agencement en quadrillage, en ligne ou en réseaux de points, ces bossages étant régulièrement espacés.

7. Appareil selon l'une des revendications 1 à 5, **caractérisé en ce que** la plaque de chauffage (22) est réalisée par un assemblage de sous-plaques (22.7) longitudinales ou transversales, l'un des bords de jointure (30.7) formant une saillie longiligne d'écartement.

8. Appareil selon l'une des revendications 1 à 5, **caractérisé en ce que** les moyens de maintien (30) sont réalisés sous la forme d'une grille rapportée (30.5) réalisée en fil métallique, céramique ou de verre, si désiré les fils étant ondulés ; ou réalisés par une série de ressorts à spires (30.6) ou de barrettes crantées parallèles côte-à-côte ; cette grille pouvant être amovible.

9. Appareil selon l'une des revendications précédentes, **caractérisé en ce qu'**au moins l'un des sous-ensembles de chauffage est constitué d'une plaque de rayonnement en substrat diélectrique sur laquelle est sérigraphiée une piste résistive de chauffage.

10. Appareil selon l'une des revendications 1 à 9, **caractérisé en ce que** :
- l'un (20') au moins des sous-ensembles étant monté déplaçable relativement en éloignement et en rapprochement par rapport à l'autre pour appliquer de part et d'autre la tranche avec une pression prédéterminée,
- les plaques sont en un matériau et présentent des dimensions telles qu'elles constituent des plaques d'accumulation thermique de chauffage par convection ou par rayonnement à courte distance.
- la plaque métallique de chauffage (22) des sous ensembles (20,20') présente une épaisseur comprise entre 4 et 10 millimètres, de préférence 6 millimètres.

## Patentansprüche

1. Gerät zum Rösten einer flachen Nahrungsmittelscheibe (1), mit einem Gehäuse (10) mit einem Schlitz (11), der es ermöglicht, in eine parallelepipedische Röstkammer (13) zu gelangen, in deren entgegengesetzten Hauptseiten jeweils zwei Heizunterbaugruppen (20, 20') gegenüberliegend angeordnet sind, wobei mindestens eine der Unterbaugruppen eine Platte (22) zur im wesentlichen homogenen Strahlung aufweist, die durch Heizmittel (24) geheizt wird, **dadurch gekennzeichnet, daß** die Strahlungsfläche dieser Platte (22) mit Mitteln (30) zum Halten eines vorbestimmten Abstands zu der Scheibe, der geringer ist als ein Zentimeter, ergänzt ist, wobei diese Fläche oder diese Scheibe mit diesen Mitteln zum Halten des Abstands entlang Oberflächen mit einer Breite unter einem Millimeter in Kontakt steht.

2. Gerät nach Anspruch 1, **dadurch gekennzeichnet, daß** die zwei Unterbaugruppen (20, 20') jeweils eine Strahlungsplatte (22) aufweisen, deren Strahlungsfläche mit Mitteln (30) zum Halten eines Abstands zur Scheibe (1) ergänzt ist, und daß mindestens eine der Unterbaugruppen (20') verschiebbar (14, 19.1, 19.2) bezüglich Entfernung und Annäherung bezogen auf die andere angebracht ist, um die Scheibe auf beiden Seiten an die Haltemittel anzulegen.

3. Gerät nach Anspruch 1 oder 2, **dadurch gekennzeichnet, daß** der durch die Haltemittel (30) gehaltene Abstand zwischen der Scheibe (1) und der Strahlungsfläche der Platte (22) zwischen 0,1 Millimetern und 6 Millimetern, vorzugsweise zwischen 1 Millimeter und 3 Millimetern, liegt.

4. Gerät nach einem der Ansprüche 1 oder 2, **dadurch gekennzeichnet, daß** der durch die Haltemittel (30) gehaltene Abstand zwischen der Scheibe und der Strahlungsfläche der Platte (22) in der Größenordnung von 3 Millimetern liegt für eine Platte (22), die auf eine Temperatur in der Größenordung von 500°C gebracht wird, oder in der Größenordnung von 2 Millimetern für eine Platte (22), die auf eine Temperatur in der Größenordnung von 400°C gebracht wird.

5. Gerät nach einem der vorangehenden Ansprüche, **dadurch gekennzeichnet, daß** die gesamte Kontaktfläche der Mittel (30) zum Halten des Abstands mit der Fläche und/oder der Scheibe geringer ist als 15 Prozent der Gesamtfläche der Strahlungsfläche der Platte (22), vorzugsweise geringer als 8 Prozent, und daß die Abstandsmittel gleichmäßig um einen Wert beabstandet sind, der zwischen 5 Millimetern und 20 Millimetern liegt.

6. Gerät nach einem der vorangehenden Ansprüche, **dadurch gekennzeichnet, daß** die Mittel (30) zum Halten des Abstands in Form von geprägten Höckern (30.3., 30.4) in der Platte (22) oder von eingedrückten Höckern (30.1, 30.2) in dicken Schichten auf der Fläche gemäß einer Anordnung in einem Gitternetz, in einer Linie oder in Netzwerken von Punkten hergestellt sind, wobei diese Höcker regelmäßig beabstandet sind.

7. Gerät nach einem der Ansprüche 1 bis 5, **dadurch gekennzeichnet, daß** die Heizplatte (22) aus einer Anordnung von Längs- oder Querunterplatten (22.7) hergestellt ist, wobei einer der Verbindungsränder (30.7) einen langgestreckten Abstandsvorsprung bildet.

8. Gerät nach einem der Ansprüche 1 bis 5, **dadurch gekennzeichnet, daß** die Haltemittel (30) in Form eines aufgesetzten Gitters (30.5) hergestellt sind, das aus Metall-, Keramik- oder Glasdraht besteht, wobei die Drähte, falls erwünscht, gewellt sind; oder aus einer Reihe von Spiralfedern (30.6) oder aus parallelen, nebeneinanderliegenden gerippten Stegen hergestellt sind; wobei dieses Gitter abnehmbar sein kann.

9. Gerät nach einem der vorangehenden Ansprüche, **dadurch gekennzeichnet, daß** mindestens eine der Heizunterbaugruppen aus einer Strahlungsplatte aus dielektrischem Substrat besteht, auf welche eine Widerstandsheizbahn siebgedruckt ist.

10. Gerät nach einem der Ansprüche 1 bis 9, **dadurch gekennzeichnet, daß**:
- mindestens eine (20') der Unterbaugruppen verschiebbar bezüglich Entfernung und Annäherung bezogen auf die andere angebracht ist, um die Scheibe mit einem vorbestimmten Druck auf beiden Seiten anzulegen,
- die Platten aus einem Material bestehen und derartige Abmessungen aufweisen, daß sie Wärmespeicherplatten zum Heizen durch Konvektion oder durch Strahlung mit kurzem Abstand bilden,
- die Metallheizplatte (22) der Unterbaugruppen (20, 20') eine Dicke zwischen 4 und 10 Millimetern, vorzugsweise von 6 Millimetern, aufweist.

## Claims

1. A toaster appliance for toasting a plane slice of food (1), the appliance comprising a housing (10) with a slot (11) giving access to a rectangularly parallelepipedal toasting chamber (13) with two facing heater sub-assemblies (20, 20') respectively arranged in the opposite main faces thereof, at least one of the sub-assemblies including a substantially uniform radiating plate (22) heated by heater means (24), the appliance being **characterized in that** the radiating face of the plate (22) is associated with gap-maintaining means (30) for maintaining a predetermined gap of less than one centimeter relative to the slice, the face or the slice being in contact with the gap-maintaining means over areas that are less than one millimeter wide.

2. An appliance according to claim 1, **characterized in that** each of the two sub-assemblies (20, 20') includes a radiating plate (22) having a radiating face that is associated with gap-maintaining means (30) for maintaining a gap relative to the slice (1), and **in that** at least one of the sub-assemblies (20') is movably mounted (14, 19.1, 19.2) to move away from and towards the other sub-assembly, so as to press both sides of the slice against the gap-maintaining means.

3. An appliance according to claim 1 or claim 2, **characterized in that** the gap maintained by the gap-maintaining means (30) between the slice (1) and the radiating face of the plate (22) lies in the range 0.1 mm to 6 mm, and is preferably in the range 1 mm to 3 mm.

4. An appliance according to claim 1 or claim 2, **characterized in that** the gap maintained by the gap-maintaining means (30) between the slice and the radiating face of the plate (22) is about 3 mm for a plate (22) that is raised to a temperature of about 500°C, or is about 2 mm for a plate (22) that is raised to a temperature of about 400°C.

5. An appliance according to any preceding claim, **characterized in that** the total area of contact between the gap-maintaining means (30) and the face and/or the slice is less than 15 percent (%) of the total area of the radiating face of the plate (22), and is preferably less than 8%, and **in that** the gap-maintaining means are regularly spaced apart by a value lying in the range 5 mm to 20 mm.

6. An appliance according to any preceding claim, **characterized in that** the gap-maintaining means (30) are made in the form of projections (30.3, 30.4) embossed in the plate (22), or of projections (30.1, 30.2) printed onto the face in thick layers, in a grid arrangement, in a line arrangement, or in an array of points, the projections being regularly spaced.

7. An appliance according to any one of claims 1 to 5, **characterized in that** the heater plate (22) is made by assembling together longitudinal or transverse sub-plates (22.7), one of the join edges (30.7) forming an elongate gap-maintaining projection.

8. An appliance according to any one of claims 1 to 5, **characterized in that** the gap-maintaining means (30) are made in the form of an add-on grid (30.5) made of optionally-corrugated glass, ceramic, or metal wire; or made of a series of spiral springs (30.6) or notched bars placed side by side in parallel; the grid being removable.

9. An appliance according to any preceding claim, **characterized in that** at least one of the heater sub-assemblies is constituted by a radiating plate made of a dielectric substrate onto which a resistive heater track is silkscreen printed.

10. An appliance according to any one of claims 1 to 9, **characterized in that**:
· at least one (20') of the sub-assemblies is movably mounted to move away from and towards the other, so as to apply a predetermined pressure to each side of the slice;
· the plates are made of a material, and present dimensions, such that they constitute plates for storing heat by convection or by short-distance radiation; and
· the metal heater plate (22) of each sub-assembly (20, 20') presents a thickness lying in the range 4 mm to 10 mm, and is preferably 6 mm thick.
